(19) **Europäisches Patentamt / European Patent Office / Office européen des brevets**

(11) **EP 3 619 519 B1**

(12) # FASCICULE DE BREVET EUROPEEN

(45) Date de publication et mention de la délivrance du brevet:
**23.03.2022 Bulletin 2022/12**

(21) Numéro de dépôt: **18724954.5**

(22) Date de dépôt: **20.04.2018**

(51) Classification Internationale des Brevets (IPC):
***G01N 21/3504*** *(2014.01)*

(52) Classification Coopérative des Brevets (CPC):
**G01N 21/3504;** G01N 2201/124

(86) Numéro de dépôt international:
**PCT/FR2018/051001**

(87) Numéro de publication internationale:
**WO 2018/202974 (08.11.2018 Gazette 2018/45)**

(54) **DISPOSITIF ET PROCEDE DE MESURE ET DE SUIVI DE LA QUANTITE OU CONCENTRATION D'UN COMPOSANT DANS UN FLUIDE**

VORRICHTUNG UND VERFAHREN ZUR MESSUNG UND VERFOLGUNG DER MENGE ODER KONZENTRATION EINER VERBINDUNG IN EINEM FLUID

DEVICE AND METHOD FOR MEASURING AND TRACKING THE QUANTITY OR CONCENTRATION OF A COMPOUND IN A FLUID

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.05.2017 FR 1753938**

(43) Date de publication de la demande:
**11.03.2020 Bulletin 2020/11**

(73) Titulaire: **Elichens**
**38025 Grenoble Cedex 1 (FR)**

(72) Inventeur: **LE, Thanh Trung**
**38100 Grenoble (FR)**

(74) Mandataire: **Bonnet, Michel**
**Cabinet Bonnet**
**93, rue Réaumur**
**75002 Paris (FR)**

(56) Documents cités:
**US-A- 4 863 265     US-B1- 6 825 471**

- **GÉRY CASIEZ ET AL: "1 Euro filter : a simple speed-based low-pass filter for noisy input in interactive systems", PROCEEDINGS OF THE 2012 ACM ANNUAL CONFERENCE ON HUMAN FACTORS IN COMPUTING SYSTEMS, CHI '12, 1 mai 2012 (2012-05-01), pages 2527-2530, XP055422465, New York, New York, USA DOI: 10.1145/2207676.2208639 ISBN: 978-1-4503-1015-4**
- **JORGE ANTONIO SILVA CENTENO ET AL: "Adaptive Low-Pass Fuzzy Filter for Noise Removal", PHOTOGRAMMETRIC ENGINEERING & REMOTE SENSING, vol. 61, no. 10, 1 octobre 1995 (1995-10-01), pages 1267-1272, XP055422801,**

EP 3 619 519 B1

Printed by Jouve, 75001 PARIS (FR)

**Description**

La présente invention concerne un dispositif de mesure et de suivi au cours du temps de la quantité ou concentration d'un composant dans un fluide. Elle concerne également un procédé et un programme d'ordinateur correspondants.

L'invention s'applique plus particulièrement à un dispositif comportant :

- un capteur apte à mesurer une quantité ou concentration du composant dans le fluide et à fournir un signal quantitatif de suivi de cette quantité ou concentration au cours du temps,
- un module de traitement de signal comportant un filtre passe-bas du signal quantitatif de suivi,
- une interface de sortie pour la fourniture du signal quantitatif de suivi filtré.

Les applications industrielles sont multiples, pour la détection de composants gazeux, liquides ou solides dans des fluides gazeux ou liquides quelconques. Les capteurs pouvant être utilisés sont également multiples et dépendent des applications visées. Un exemple non limitatif est la recherche de certaines espèces gazeuses dans l'air, telles que des polluants identifiés et/ou des gaz à effet de serre, à l'aide de méthodes optiques de détection basées sur les propriétés spectrales d'absorption des différentes espèces pouvant composer un gaz et sur la loi de Beer-Lambert. Le capteur peut dans ce cas être de type NDIR (de l'anglais « Non-Dispersive InfraRed »), c'est-à-dire à émetteur infrarouge non dispersif et, généralement, à détecteur thermopile.

Un dispositif de ce type est par exemple décrit dans la demande de brevet US 2003/0058439 A1 ou dans la demande de brevet WO 2007/064370 A2. D'autres dispositifs exploitant la même méthode optique mais présentant en outre des coûts de production et un encombrement optimisés sont également commercialisés par la demanderesse en technologie MEMS (de l'anglais « MicroElectroMechanical Systems »). Ils peuvent être intégrés dans des systèmes électroniques portatifs tels que des tablettes numériques, téléphones portables, appareils photographiques ou autres. Ils peuvent aussi être intégrés dans des systèmes fixes en domotique, détection industrielle ou analyse de qualité de l'air. Les signaux qu'ils fournissent peuvent être avantageusement utilisés pour un affichage d'information ou pour un déclenchement d'alerte en cas de danger identifié.

Le brevet US 4,863,265 divulgue un appareil pour la détermination non invasive de concentrations de constituants en utilisant des mesures d'absorption d'ondes lumineuses et des méthodes pour traiter des signaux générés par de telles mesures en utilisant un filtre adaptatif passe-bas.

G. Casiez et al., "1€ Filter: A Simple Speed-based Low-pass Filter for Noisy Input in Interactive Systems", Proc. CHI'12, pp. 2527-2530 (2012), divulgue un filtre passe-bas à fréquence de coupure adaptative.

Mais pour une meilleure exploitation des signaux fournis par ce type de dispositif, ceux-ci ne sont que rarement directement issus du capteur. Ils subissent généralement un traitement comportant au moins un léger filtrage passe-bas visant à débarrasser les signaux de certains bruits ou artéfacts. Ce filtrage engendre en outre un lissage facilitant la lecture de l'information ou l'interprétation de la détection. Il introduit en contrepartie une latence entre la quantité ou concentration de composant estimée et la quantité ou concentration réelle à chaque instant. Cette latence peut poser problème dans certaines applications où une augmentation ou baisse rapide d'un composant, jugé dangereux ou vital, dans un fluide nécessite une détection précise et une réactivité élevée (déclenchement d'une alarme ou d'un plan d'actions). Un compromis, qui s'avère toujours insatisfaisant, doit alors être trouvé entre l'efficacité et la latence du filtrage passe-bas.

Il peut ainsi être souhaité de prévoir un dispositif qui permette de s'affranchir au moins partiellement du compromis précité.

Il est donc proposé un dispositif de mesure et de suivi au cours du temps de la quantité ou concentration d'un composant dans un fluide, comportant :

- un capteur apte à mesurer une quantité ou concentration du composant dans le fluide et à fournir un signal quantitatif de suivi de cette quantité ou concentration au cours du temps,
- un module de traitement de signal comportant un filtre passe-bas du signal quantitatif de suivi,
- une interface de sortie pour la fourniture du signal quantitatif de suivi filtré.

dans lequel le module de traitement de signal comporte :

- un estimateur d'une valeur de tendance instantanée de variation du signal quantitatif de suivi dans une fenêtre temporelle glissante prédéterminée, et
- des moyens de réglage au cours du temps d'une fréquence de coupure haute du filtre passe-bas en fonction de la valeur de tendance instantanée de variation estimée.

En agissant sur la fréquence de coupure haute du filtrage passe-bas, on agit généralement directement sur la latence : plus la fréquence de coupure haute est basse, plus le signal quantitatif de suivi est lissé et aisé à interpréter mais plus la latence introduite est élevée ; au contraire, plus la fréquence de coupure haute est élevée, plus la latence est faible mais plus le signal quantitatif de suivi est bruité et difficile à interpréter. Ainsi, l'invention permet d'adapter dynamiquement cette fréquence de coupure haute en fonction d'une estimation de variation du signal quantitatif de suivi dans une fenêtre temporelle glissante prédéterminée qui peut être bien moins longue que la latence d'un filtre passe-bas dont les paramètres résulteraient d'un compromis insatisfaisant tel que celui précité. En ce faisant, on adapte en temps réel le filtrage passe-bas à la variabilité du signal et le compromis devient dynamique donc satisfaisant.

On notera par ailleurs que la notion de filtre passe-bas inclut celle de filtre passe-bande. En effet, un filtre passe-bande doit être considéré comme un cas particulier de filtre passe-bas, i.e. un filtre passe-bas présentant en outre une fréquence de coupure basse inférieure à sa fréquence de coupure haute.

De façon optionnelle, l'estimateur est conçu pour estimer la valeur de tendance instantanée de variation du signal quantitatif de suivi en fournissant une valeur de pente de ce signal dans la fenêtre temporelle glissante prédéterminée, notamment par régression linéaire. Cette estimation particulièrement simple peut être réalisée dans des temps très brefs.

De façon optionnelle également, les moyens de réglage sont conçus de manière à :

- réduire la fréquence de coupure haute du filtre passe-bas lorsque la valeur de tendance instantanée de variation estimée diminue en valeur absolue, et
- augmenter la fréquence de coupure haute du filtre passe-bas lorsque la valeur de tendance instantanée de variation estimée augmente en valeur absolue.

De façon optionnelle également, le filtre passe-bas est conçu pour réaliser, après échantillonnage temporel du signal quantitatif de suivi, un filtrage numérique par moyenne glissante pondérée exponentiellement selon la relation temporelle de récurrence suivante :

$$\begin{cases} \bar{y}_1 = y_1 \\ \forall i \geq 2, \ \bar{y}_i = \alpha . \bar{y}_{i-1} + (1 - \alpha) . y_i \end{cases},$$

où $y_1, ..., y_i, ...$ sont des échantillons temporels successifs du signal quantitatif de suivi, $\bar{y}_1, ..., \bar{y}_i, ...$ sont les échantillons temporels successifs résultants du signal quantitatif de suivi filtré et $\alpha$ est un coefficient de pondération exponentielle du filtrage numérique par moyenne glissante compris entre 0 et 1 et mathématiquement lié à la fréquence de coupure haute $f_C$ de ce filtrage numérique. Ce type de filtrage passe-bas est particulièrement simple à régler à l'aide d'un unique paramètre, en l'occurrence $\alpha$.

De façon optionnelle également, les moyens de réglage sont configurés en logique floue de manière à :

- distinguer N états de tendance instantanée de variation, N ≥ 2, chacun de ces N états étant associé à une valeur correspondante prédéterminée de fréquence de coupure haute du filtre passe-bas et à une fonction d'appartenance à valeurs dans l'intervalle [0 ; 1] définie dans une plage de valeurs possibles de tendance instantanée de variation, et
- régler la fréquence de coupure haute du filtre passe-bas comme une somme des N valeurs prédéterminées de fréquence de coupure haute pondérées respectivement par N degrés d'appartenance de la valeur de tendance instantanée de variation estimée à chacun des N états de tendance instantanée de variation, ces degrés d'appartenance étant calculés à l'aide des N fonctions d'appartenance.

La configuration en logique floue apporte un réglage réactif mais sans rupture du filtrage passe-bas.

De façon optionnelle également, N ≥ 3 et :

- un premier état stable est associé à une fréquence de coupure haute liée à une valeur du coefficient $\alpha$ de pondération exponentielle comprise entre 0,9 et 1,
- un deuxième état de variation lente est associé à une fréquence de coupure haute liée à une valeur du coefficient $\alpha$ de pondération exponentielle comprise entre 0,7 et 0,9,
- un troisième état de variation rapide est associé à une fréquence de coupure haute liée à une valeur du coefficient $\alpha$ de pondération exponentielle comprise entre 0,1 et 0,3.

De façon optionnelle également, chaque fonction d'appartenance est une fonction gaussienne ou linéaire par morceaux. Ces fonctions sont simples à mettre en œuvre en logique floue.

De façon optionnelle également, le capteur est un capteur de gaz à émetteur infrarouge non dispersif et à détecteur thermopile. Dans ce cas, l'invention permet une application dans la détection de gaz en milieu gazeux.

Il est également proposé un procédé de mesure et de suivi au cours du temps de la quantité ou concentration d'un composant dans un fluide, comportant les étapes suivantes :

- mesurer une quantité ou concentration du composant dans le fluide et fournir un signal quantitatif de suivi de cette quantité ou concentration au cours du temps, à l'aide d'un capteur,
- traiter le signal quantitatif de suivi à l'aide d'un filtre passe-bas,
- fournir en sortie le signal quantitatif filtré,

dans lequel le traitement du signal quantitatif de suivi comporte :

- une estimation au cours du temps d'une tendance instantanée de variation du signal quantitatif dans une fenêtre temporelle glissante prédéterminée, et
- le réglage au cours du temps d'une fréquence de coupure haute du filtre passe-bas en fonction de la tendance instantanée de variation estimée.

Il est également proposé un programme d'ordinateur téléchargeable depuis un réseau de communication et/ou enregistré sur un support lisible par ordinateur et/ou exécutable par un processeur, comprenant des instructions pour l'exécution des étapes suivantes :

- recevoir un signal numérique quantitatif de suivi d'une quantité ou concentration au cours du temps d'un composant dans un fluide,
- traiter le signal quantitatif de suivi par filtrage passe-bas,

le filtrage passe-bas étant réalisé à l'aide d'instructions pour l'exécution des étapes suivantes :

- estimer au cours du temps une tendance instantanée de variation du signal quantitatif dans une fenêtre temporelle glissante prédéterminée, et
- régler au cours du temps une fréquence de coupure haute du filtrage passe-bas en fonction de la tendance instantanée de variation estimée.

L'invention sera mieux comprise à l'aide de la description qui va suivre, donnée uniquement à titre d'exemple et faite en se référant aux dessins annexés dans lesquels :

- la figure 1 représente schématiquement la structure générale d'un dispositif de mesure et de suivi de la quantité ou concentration d'un composant dans un fluide, selon un mode de réalisation de l'invention,
- la figure 2 illustre les étapes successives d'un procédé de mesure et de suivi de la quantité ou concentration d'un composant dans un fluide mis en oeuvre par le dispositif de la figure 1,
- la figure 3 illustre un diagramme de fonctions d'appartenance d'un modèle de logique floue exploité par le procédé de la figure 2,
- les figures 4 et 5 illustrent à l'aide de diagrammes des résultats intermédiaires et finaux d'une mise en œuvre du procédé de la figure 2.

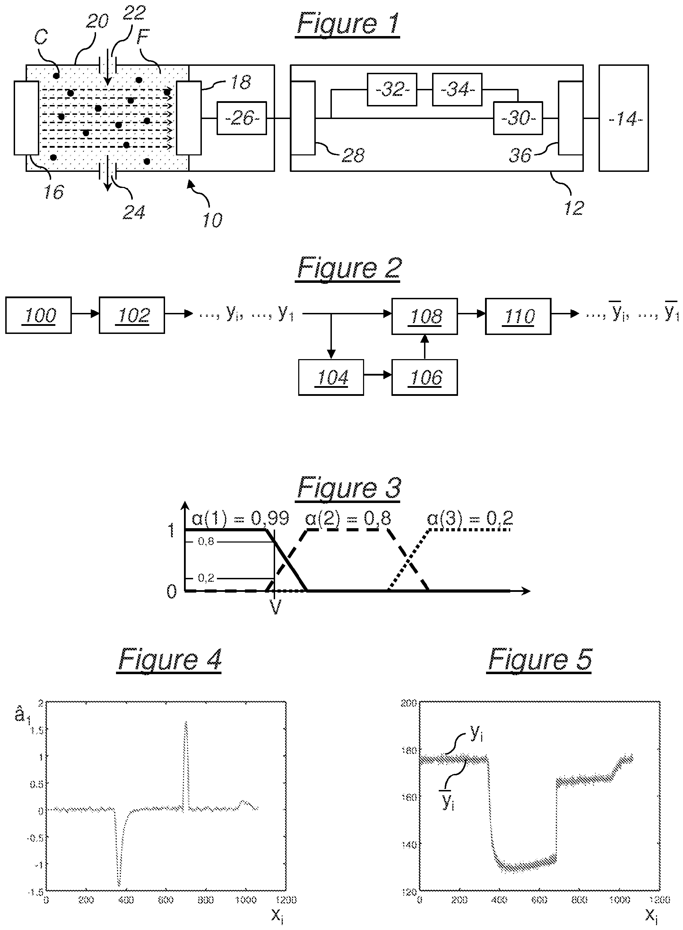

Le dispositif illustré sur la figure 1, convenant pour la mesure et le suivi au cours du temps de la quantité ou concentration d'un composant C dans un fluide F, comporte un capteur 10, un module 12 de traitement de signal et un module 14 d'exploitation de données fournies par le module 12.

Le capteur 10 est apte à mesurer une quantité ou concentration du composant C dans le fluide F et à fournir un signal quantitatif de suivi de cette quantité ou concentration au cours du temps. Conformément à l'exemple précisément illustré sur la figure 1 mais non limitatif, le capteur 10 est un capteur d'espèces gazeuses en milieu gazeux de type NDIR, c'est-à-dire à émetteur infrarouge 16 et détecteur thermopile 18. Dans ce cas précis, le fluide F est un gaz et le composant C est une espèce gazeuse particulière dont on souhaite suivre la quantité ou concentration dans F. Plus précisément, le capteur 10 comporte une enceinte 20 pourvue d'une première ouverture 22 par laquelle entre le gaz à analyser F et d'une deuxième ouverture 24 par laquelle sort ce même gaz F. L'entrée et/ou la sortie de gaz peu(ven)t être forcée(s), par l'entretien d'un différentiel de pression, ou spontanée(s), par simple effet de diffusion. L'émetteur infrarouge 16 illumine le gaz F à l'intérieur de l'enceinte dans une bande spectrale prédéterminée et le détecteur thermopile 18 reçoit le rayonnement lumineux transmis par le gaz F. Ce rayonnement lumineux a subi certaines absorptions directement liées à la quantité ou concentration du composant C dans le gaz F. Ensuite, un convertisseur 26 du capteur 10 transforme le rayonnement lumineux analogique reçu par le détecteur thermopile 18 en un signal numérique et échantillonné, directement lié à l'absorption du rayonnement lumineux par le composant C dans le gaz F et finalement représentatif de la quantité ou concentration du composant C mesurée à chaque instant d'échantillonnage. Ce signal quantitatif de suivi est noté $y_1, ..., y_i, ...$ dans la suite de la description.

Le module 12 de traitement de signal reçoit le signal quantitatif de suivi $y_1, ..., y_i, ...$ par une interface d'entrée 28. Il comporte en outre un filtre passe-bas 30 et un estimateur de variation instantanée 32 auxquels il transmet ce signal $y_1, ..., y_i, ....$ L'estimateur 32 est plus précisément conçu pour calculer une valeur V de tendance instantanée de variation du signal quantitatif de suivi dans une fenêtre temporelle glissante de longueur T prédéterminée. Avantageusement, cette longueur T est très inférieure à la latence que peut engendrer le filtre passe-bas 30. Par ailleurs, conformément aux principes généraux de la présente invention, le module 12 comporte aussi des moyens 34 de réglage au cours du temps d'une fréquence de coupure haute $f_C$ du filtre passe-bas 30 en fonction de la valeur de tendance instantanée de variation retournée par l'estimateur 32. Enfin, il comporte une interface de sortie 36 pour la fourniture du signal quantitatif de suivi filtré. Ce signal filtré est noté $\overline{y}_1, ..., \overline{y}_i, ...$ dans la suite de la description.

Dans un mode de réalisation préféré, l'estimateur de variation instantanée 32 est conçu pour estimer la valeur V de tendance instantanée de variation du signal quantitatif de suivi $y_1, ..., y_i, ...$ en fournissant une valeur de pente de ce signal dans la fenêtre temporelle glissante prédéterminée, notamment par régression linéaire. Une telle régression linéaire est pertinente si l'on peut supposer que le signal quantitatif de suivi est approximativement linéaire dans la fenêtre temporelle considérée, ce qui est souvent le cas dans des intervalles temporels courts. En notant par exemple $x_{i-T}, ..., x_i$ les T instants d'échantillonnage de la fenêtre temporelle glissante à un instant $x_i$ auquel on veut estimer la valeur V, la régression linéaire consiste à exprimer le signal de suivi correspondant $y_{i-T}, ..., y_i$ sous la forme suivante :

$$\begin{bmatrix} y_{i-T} \\ \vdots \\ y_i \end{bmatrix} = \begin{bmatrix} 1 & x_{i-T} \\ \vdots & \vdots \\ 1 & x_i \end{bmatrix} \cdot \begin{bmatrix} a_0 \\ a_1 \end{bmatrix} + \begin{bmatrix} \varepsilon_{i-T} \\ \vdots \\ \varepsilon_i \end{bmatrix},$$

et à déterminer les valeurs $\check{a}_0$ et $\check{a}_1$ qui minimisent les erreurs résiduelles de moyenne nulle $\varepsilon_{i-T}, ..., \varepsilon_i$.

En notant :

$$Y = \begin{bmatrix} y_{i-T} \\ \vdots \\ y_i \end{bmatrix} \text{ et } X = \begin{bmatrix} 1 & x_{i-T} \\ \vdots & \vdots \\ 1 & x_i \end{bmatrix},$$

la valeur $\hat{A} = \begin{bmatrix} \widehat{a_0} \\ \widehat{a_1} \end{bmatrix}$ qui est la solution des moindres carrés par minimisation de l'erreur quadratique moyenne est estimée de la façon suivante :

$\hat{A} = [X^T X]^{-1}.X^T.Y$, où $X^T$ est la transposée de la matrice X.

Il en résulte que la valeur V de tendance instantanée de variation peut être choisie comme égale à la valeur absolue de la pente $\check{a}_1$. Comme indiqué par les calculs précédents et conformément à la notion de fenêtre temporelle glissante, cette valeur V est révisable à chaque réception d'un nouvel échantillon de signal quantitatif de suivi.

Dans un mode de réalisation préféré également, les moyens de réglage 34 sont conçus pour :

- réduire la fréquence de coupure haute $f_C$ du filtre passe-bas 30 lorsque la valeur V de tendance instantanée de variation calculée par l'estimateur 32 diminue en valeur absolue, et
- augmenter la fréquence de coupure haute $f_C$ du filtre passe-bas 30 lorsque la valeur V de tendance instantanée de variation calculée par l'estimateur 32 augmente en valeur absolue.

Dans ce cas, une relation directe entre V et $f_C$ peut être prédéfinie dans les moyens de réglage, par exemple sous la forme d'une fonction croissante, pour régler la fréquence de coupure haute $f_C$ en fonction de V. Puisque la valeur V est révisable à chaque réception d'un nouvel échantillon de signal quantitatif de suivi, la fréquence de coupure haute $f_C$ est de même réglable à la même cadence.

Dans un mode de réalisation préféré également, le filtre passe-bas 30 est numérique et conçu pour réaliser sur le signal quantitatif de suivi échantillonné $y_1,...,y_n,...$ un filtrage numérique par moyenne glissante pondérée exponentiellement selon la relation temporelle de récurrence suivante :

$$\begin{cases} \bar{y}_1 = y_1 \\ \forall n \geq 2, \ \bar{y}_n = \alpha.\bar{y}_{n-1} + (1-\alpha).y_n \end{cases},$$

où $\alpha$ est un coefficient de pondération exponentielle du filtrage numérique par moyenne glissante compris entre 0 et 1 et mathématiquement lié à la fréquence de coupure haute $f_C$ de ce filtrage numérique. Il peut par exemple être montré à partir de la relation temporelle de récurrence ci-dessus que cette relation mathématique prend la forme suivante pour une estimation de la fréquence de coupure haute à -3 dB :

$$f_C = \frac{F_S}{2\pi}\cos^{-1}\left[\max\left(-1 \ ; \ 1 - \frac{(1-\alpha)^2}{2\alpha}\right)\right],$$

où $F_S$ est la fréquence d'échantillonnage, $\cos^{-1}$ est l'inverse de la fonction cosinus et max ( ; ) est la fonction qui retourne le maximum entre deux valeurs.

Cette relation mathématique résulte notamment de l'enseignement de l'ouvrage de Rick Lyons, intitulé « Understanding Digital Signal Processing », 3e édition, Prentice Hall Publishing, 2011, pages 613-614. Elle peut être simplifiée de la façon suivante lorsque $f_C$ reste faible devant $F_S$, notamment tant que $f_C \leq 0{,}1F_S$ :

$$f_C = -\frac{F_S}{2\pi}\ln(\alpha).$$

Dans ce cas, la relation directe entre V et $f_C$ peut être prédéfinie en toute équivalence par une relation directe entre V et $\alpha$.

Dans un mode de réalisation préféré, cette relation directe est configurée en logique floue dans les moyens de réglage 34 de la façon suivante :

- N états discrets de tendance instantanée de variation sont définis et distingués, N ≥ 2, chacun de ces N états étant associé à une valeur correspondante prédéterminée $f_C(n)$ de fréquence de coupure haute $f_C$ du filtre passe-bas 30, ou de façon équivalente à une valeur correspondante prédéterminée $a(n)$ du coefficient de pondération $\alpha$, et à une fonction d'appartenance $F_{MS,n}$ à valeurs dans l'intervalle [0 ; 1] définie dans une plage de valeurs possibles pour V (par exemple incluse dans [0 ; +∞[), et
- régler la fréquence de coupure haute $f_C$ du filtre passe-bas 30, ou de façon équivalente le coefficient de pondération $\alpha$, comme une somme des N valeurs prédéterminées de fréquence de coupure haute, ou de façon équivalente comme une somme des N valeurs prédéterminées du coefficient de pondération, pondérées respectivement par N degrés d'appartenance de la valeur V estimée à chacun des N états de tendance instantanée de variation, ces degrés d'appartenance étant calculés à l'aide des N fonctions d'appartenance.

Chaque fonction d'appartenance est par exemple une fonction gaussienne ou linéaire par morceaux. Toute autre famille de fonctions d'appartenance bien connue en logique floue peut également être envisagée et adaptée selon les besoins de l'application visée et du contexte.

Les éléments 30, 32, 34 du module 12 de traitement de signal, tels qu'illustrés sur la figure 1 et détaillés fonctionnellement précédemment, peuvent par exemple être mis en œuvre dans au moins un dispositif informatique tel qu'un ordinateur classique comportant un processeur associé à une ou plusieurs mémoires pour le stockage de fichiers de données et de programmes d'ordinateurs, ou même directement un ou plusieurs processeur(s) associé(s) à une ou plusieurs mémoire(s).

Ces modules fonctionnels comportent ainsi plusieurs programmes d'ordinateurs ou plusieurs fonctions d'un même programme d'ordinateur, ces programmes ou fonctions pouvant être regroupés selon toutes les combinaisons possibles en un ou plusieurs logiciels. Ils pourraient aussi être au moins en partie micro programmés ou micro câblés dans des circuits intégrés dédiés. Ainsi, en variante, chaque dispositif informatique mettant en œuvre l'un ou plusieurs des modules fonctionnels décrits ci-dessus pourrait être remplacé par un dispositif électronique composé uniquement de circuits numériques (sans programme d'ordinateur) pour la réalisation des mêmes actions.

Le module 14 d'exploitation de données fournies par le module 12 reçoit le signal filtré $\bar{y}_1,...,\bar{y}_i,...$ De façon connue en soi, il exploite et traite ce signal pour un affichage d'information ou pour un déclenchement d'alerte en cas de problème, par exemple en cas de dépassement d'un seuil prédéterminé de la quantité ou concentration détectée de composant C dans le gaz F. Son fonctionnement ne sera donc pas détaillé. On notera simplement que le traitement réalisé par le module 12 peut inclure une conversion du signal filtré $\overline{y}_1,...,\overline{y}_i,...$ en un signal directement représentatif de la quantité ou concentration du composant C mesurée à chaque instant d'échantillonnage, cette conversion étant réalisée de façon connue en soi par exploitation de la loi de Beer-Lambert.

On notera que le capteur 10, le module 12 de traitement de signal et le module 14 d'exploitation de données sont structurellement séparables. Ainsi le dispositif illustré sur la figure 1 peut être conçu d'un seul tenant ou en plusieurs éléments matériels distincts reliés entre eux par des moyens de transmission de données avec ou sans fil. Les différentes configurations possibles sont guidées par les applications visées.

Le fonctionnement du dispositif de la figure 1 va maintenant être détaillé en référence aux différentes étapes du procédé illustré sur la figure 2.

Au cours d'une étape 100 exécutée continûment par le capteur 10, le détecteur thermopile 18 fournit un signal analogique continu de mesure d'absorption lumineuse par le composant C d'un rayonnement lumineux émis par l'émetteur infrarouge 16 et transmis par le gaz F.

Au cours d'une étape 102 exécutée continûment par le convertisseur 26 du capteur 10, le signal analogique continu fourni par le détecteur thermopile 18 par exécution de l'étape 100 est converti numériquement pour fournir les échantillons temporels successifs du signal quantitatif de suivi $y_1,...,y_i,...$.

Au cours d'une étape 104 exécutée à chaque instant de l'échantillonnage temporel par l'estimateur 32, une valeur V de tendance instantanée de variation du signal quantitatif de suivi $y_1,...,y_i,...$ dans une fenêtre temporelle glissante de longueur N prédéterminée est calculée.

Au cours d'une étape 106 exécutée à chaque instant de l'échantillonnage temporel par les moyens de réglage 34, la fréquence de coupure haute $f_C$ du filtre passe-bas 30, ou de façon équivalente le coefficient de pondération $\alpha$ précité dans le cas d'un filtrage numérique par moyenne glissante pondérée exponentiellement, est réglée en fonction de la valeur V estimée à l'étape 104.

Au cours d'une étape 108 exécutée à chaque instant de l'échantillonnage temporel par le filtre passe-bas 30 qui applique la fréquence de coupure haute $f_C$, ou de façon équivalente le coefficient de pondération $\alpha$ précité dans le cas d'un filtrage numérique par moyenne glissante pondérée exponentiellement, le signal quantitatif de suivi $y_1,...,y_i,...$ est filtré et transformé en $\overline{y}_1,...,\overline{y}_i,...$.

Ce signal quantitatif de suivi filtré $\overline{y}_1,...,\overline{y}_i,...$ est progressivement transmis au module 14 d'exploitation de données par l'interface de sortie 36 au cours d'une étape 110 exécutée à chaque instant de l'échantillonnage temporel par cette dernière.

Un exemple simple et concret de calcul du coefficient de pondération $\alpha$ précité en fonction de la valeur V estimée à chaque instant d'échantillonnage temporel est illustré sur la figure 3. Conformément à la configuration en logique floue présentée de façon générale précédemment, pour N = 3 :

- un premier état stable est associé à une fréquence de coupure haute liée à une valeur $\alpha(1)$ du coefficient $\alpha$ de pondération exponentielle comprise entre 0,9 et 1, par exemple $\alpha(1) = 0,99$ ;
- un deuxième état de variation lente est associé à une fréquence de coupure haute liée à une valeur $\alpha(2)$ du coefficient $\alpha$ de pondération exponentielle comprise entre 0,7 et 0,9, par exemple $\alpha(2) = 0,8$ ;
- un troisième état de variation rapide est associé à une fréquence de coupure haute liée à une valeur $\alpha(3)$ du coefficient $\alpha$ de pondération exponentielle comprise entre 0,1 et 0,3, par exemple $\alpha(3) = 0,2$.

L'état stable est associé à une première fonction d'appartenance $F_{MS,1}$ à valeurs dans l'intervalle [0 ; 1] définie dans la plage de valeurs [0 ; +∞[. Pour une illustration simple, cette première fonction d'appartenance est linéaire par morceaux dans l'exemple de la figure 3. Elle prend tout d'abord continûment la valeur 1 dans un premier intervalle, puis décroît linéairement vers 0 dans un deuxième intervalle, puis prend continûment la valeur 0 dans le reste de la plage de valeurs.

L'état de variation lente est associé à une deuxième fonction d'appartenance $F_{MS,2}$ à valeurs dans l'intervalle [0 ; 1] définie dans la plage de valeurs [0 ; +∞[. Pour une illustration simple, cette deuxième fonction d'appartenance est également linéaire par morceaux. Elle prend tout d'abord continûment la valeur 0 dans le premier intervalle, puis croît linéairement vers 1 dans le deuxième intervalle, puis prend continûment la valeur 1 dans un troisième intervalle, puis décroît linéairement vers 0 dans un quatrième intervalle, puis prend continûment la valeur 0 dans le reste de la plage de valeurs.

L'état de variation rapide est associé à une troisième fonction d'appartenance $F_{MS,3}$ à valeurs dans l'intervalle [0 ; 1] définie dans la plage de valeurs [0 ; +∞[. Pour une illustration simple, cette troisième fonction d'appartenance est également linéaire par morceaux. Elle prend tout d'abord continûment la valeur 0 dans les premier, deuxième et troisième intervalles, puis croît linéairement vers 1 dans le quatrième intervalle, puis prend continûment la valeur 1 dans le reste de la plage de valeurs.

Le coefficient de pondération $\alpha$ est alors déterminé à partir la valeur V estimée à chaque instant d'échantillonnage temporel par la relation suivante :

$$\alpha = F_{MS,1}[V].\alpha(1) + F_{MS,2}[V].\alpha(2) + F_{MS,3}[V].\alpha(3),$$

soit, par exemple dans l'illustration précise de la figure 3 :

$$\alpha = 0,8 \times 0,99 + 0,2 \times 0,8 + 0 \times 0,2 = 0,952.$$

Les figures 4 et 5 illustrent des résultats obtenus sur un signal quantitatif de suivi à 1100 échantillons successifs. La figure 4 illustre 1100 valeurs successives de pente $a_1$ calculées par l'estimateur 32. On observe une relative stabilité du signal quantitatif de suivi jusque vers l'échantillon 340, puis une décroissance rapide autour de l'échantillon 340, puis de nouveau une relative stabilité jusque vers l'échantillon 680, puis une croissance rapide autour de l'échantillon 680, puis une relative stabilité jusque vers l'échantillon 950, puis une croissance lente entre les échantillons 950 et 1050, puis une relative stabilité après l'échantillon 1050. La figure 5 illustre le signal quantitatif de suivi avant et après un filtrage passe-bas exploitant, comme évoqué précédemment, les variations instantanées de la figure 4. Il est très clair que le signal quantitatif de suivi avant filtrage détecte sans latence toute variation rapide de quantité ou concentration en composant C dans le gaz F, mais au prix de valeurs très bruitées dans les zones de stabilité ou de variations lentes. Il est très clair également que le signal quantitatif de suivi après filtrage détecte également sans latence toute variation rapide de quantité ou concentration en composant C dans le gaz F, avec des valeurs qui ne sont pas bruitées dans les zones de stabilité ou de variations lentes. Le compromis dynamique dans le réglage de la fréquence de coupure haute du filtrage passe-bas est donc très efficace.

Il apparaît clairement qu'un dispositif de mesure et de suivi tel que celui décrit précédemment permet de mesurer et suivre, de façon débruitée et sans latence gênante, une quantité ou concentration d'un composant C dans un fluide F.

On notera par ailleurs que l'invention n'est pas limitée au mode de réalisation décrit précédemment en référence aux figures 1 et 2.

Ainsi par exemple, bien que le filtrage passe-bas ait été proposé précédemment directement sur le signal issu du détecteur thermopile 18, après échantillonnage et numérisation, il aurait aussi pu être proposé à un autre endroit de la chaîne de traitement, notamment après conversion selon la loi de Beer-Lambert. Néanmoins, cette variante est moins avantageuse parce que l'expression en exponentielle de la loi de Beer-Lambert engendre une amplification importante des variations bruitées avant filtrage passe-bas.

Il apparaîtra plus généralement à l'homme de l'art que diverses modifications peuvent être apportées au mode de réalisation décrit ci-dessus, à la lumière de l'enseignement qui vient de lui être divulgué. En particulier, bien que l'estimation de variation instantanée du signal quantitatif de suivi ait été préconisée avantageusement par régression linéaire du fait de la simplicité de cette méthode, d'autres méthodes connues de l'homme du métier pour estimer une tendance de variation instantanée d'un signal peuvent être appliquées. De même, bien qu'un filtrage numérique par moyenne glissante pondérée exponentiellement ait été préconisé pour le fonctionnement du filtre passe-bas 30, d'autres filtres passe-bas à fréquence de coupure haute réglable, notamment d'autres filtres à réponse impulsionnelle infinie, peuvent être envisagés. De même, de multiples relations directes entre V et $f_C$ peut être définies par l'homme du métier, même si la configuration en logique floue présente des avantages particuliers et s'avère astucieuse.

D'une façon générale, dans les revendications qui suivent, les termes utilisés ne doivent pas être interprétés comme limitant l'invention au mode de réalisation exposé dans la présente description, mais doivent être interprétés pour y inclure tous les équivalents que les revendications visent à couvrir du fait de leur formulation et dont la prévision est à la portée de l'homme de l'art en appliquant ses connaissances générales à la mise en œuvre de l'enseignement qui vient de lui être divulgué.

**Revendications**

1.   Dispositif de mesure et de suivi au cours du temps de la quantité ou concentration d'un composant (C) dans un fluide (F), comportant :

    - un capteur (10) apte à mesurer une quantité ou concentration du composant (C) dans le fluide (F) et à fournir un signal quantitatif de suivi de cette quantité ou concentration au cours du temps,
    - un module (12) de traitement de signal comportant un filtre passe-bas (30) du signal quantitatif de suivi,
    - une interface de sortie (36) pour la fourniture du signal quantitatif de suivi filtré,

**caractérisé en ce que** le module (12) de traitement de signal comporte :

- un estimateur (32) d'une valeur (V) de tendance instantanée de variation du signal quantitatif de suivi dans une fenêtre temporelle glissante prédéterminée, et
- des moyens (34) de réglage au cours du temps d'une fréquence de coupure haute du filtre passe-bas (30) en fonction de la valeur (V) de tendance instantanée de variation estimée.

2. Dispositif de mesure et de suivi selon la revendication 1, dans lequel l'estimateur (32) est conçu pour estimer la valeur (V) de tendance instantanée de variation du signal quantitatif de suivi en fournissant une valeur de pente de ce signal dans la fenêtre temporelle glissante prédéterminée, notamment par régression linéaire.

3. Dispositif de mesure et de suivi selon la revendication 1 ou 2, dans lequel les moyens de réglage (34) sont conçus de manière à :

- réduire la fréquence de coupure haute du filtre passe-bas (30) lorsque la valeur (V) de tendance instantanée de variation estimée diminue en valeur absolue, et
- augmenter la fréquence de coupure haute du filtre passe-bas (30) lorsque la valeur (V) de tendance instantanée de variation estimée augmente en valeur absolue.

4. Dispositif de mesure et de suivi selon l'une quelconque des revendications 1 à 3, dans lequel le filtre passe-bas (30) est conçu pour réaliser, après échantillonnage temporel du signal quantitatif de suivi, un filtrage numérique par moyenne glissante pondérée exponentiellement selon la relation temporelle de récurrence suivante :

$$\begin{cases} \bar{y}_1 = y_1 \\ \forall i \geq 2, \ \bar{y}_i = \alpha.\bar{y}_{i-1} + (1-\alpha).y_i \end{cases},$$

où $y_1,...,y_i,...$ sont des échantillons temporels successifs du signal quantitatif de suivi, $\bar{y}_1,...,\bar{y}_i,...$ sont les échantillons temporels successifs résultants du signal quantitatif de suivi filtré et $\alpha$ est un coefficient de pondération exponentielle du filtrage numérique par moyenne glissante compris entre 0 et 1 et mathématiquement lié à la fréquence de coupure haute $f_C$ de ce filtrage numérique.

5. Dispositif de mesure et de suivi selon l'une quelconque des revendications 1 à 4, dans lequel les moyens de réglage (34) sont configurés en logique floue de manière à :

- distinguer N états de tendance instantanée de variation, $N \geq 2$, chacun de ces N états étant associé à une valeur correspondante prédéterminée de fréquence de coupure haute du filtre passe-bas (30) et à une fonction d'appartenance à valeurs dans l'intervalle [0 ; 1] définie dans une plage de valeurs possibles de tendance instantanée de variation, et
- régler la fréquence de coupure haute du filtre passe-bas (30) comme une somme des N valeurs prédéterminées de fréquence de coupure haute pondérées respectivement par N degrés d'appartenance de la valeur de tendance instantanée de variation estimée à chacun des N états de tendance instantanée de variation, ces degrés d'appartenance étant calculés à l'aide des N fonctions d'appartenance.

6. Dispositif de mesure et de suivi selon les revendications 4 et 5, dans lequel $N \geq 3$ et :

- un premier état stable est associé à une fréquence de coupure haute liée à une valeur du coefficient $\alpha$ de pondération exponentielle comprise entre 0,9 et 1,
- un deuxième état de variation lente est associé à une fréquence de coupure haute liée à une valeur du coefficient $\alpha$ de pondération exponentielle comprise entre 0,7 et 0,9,
- un troisième état de variation rapide est associé à une fréquence de coupure haute liée à une valeur du coefficient $\alpha$ de pondération exponentielle comprise entre 0,1 et 0,3.

7. Dispositif de mesure et de suivi selon la revendication 5 ou 6, dans lequel chaque fonction d'appartenance est une fonction gaussienne ou linéaire par morceaux.

8. Dispositif de mesure et de suivi selon l'une quelconque des revendications 1 à 7, dans lequel le capteur (10) est un capteur de gaz à émetteur infrarouge non dispersif (16) et à détecteur thermopile (18).

9. Procédé de mesure et de suivi au cours du temps de la quantité ou concentration d'un composant (C) dans un fluide (F), comportant les étapes suivantes :

- mesurer (100) une quantité ou concentration du composant (C) dans le fluide (F) et fournir (102) un signal quantitatif de suivi de cette quantité ou concentration au cours du temps, à l'aide d'un capteur (10),
- traiter (104, 106, 108) le signal quantitatif de suivi à l'aide d'un filtre passe-bas (30),
- fournir (110) en sortie (36) le signal quantitatif filtré,

**caractérisé en ce que** le traitement (104, 106, 108) du signal quantitatif de suivi comporte :

- une estimation (104) au cours du temps d'une tendance instantanée (V) de variation du signal quantitatif dans une fenêtre temporelle glissante prédéterminée, et
- le réglage (106) au cours du temps d'une fréquence de coupure haute du filtre passe-bas (30) en fonction de la tendance instantanée (V) de variation estimée.

10. Programme d'ordinateur téléchargeable depuis un réseau de communication et/ou enregistré sur un support lisible par ordinateur et/ou exécutable par un processeur, comprenant des instructions pour l'exécution des étapes suivantes :

- recevoir (102) un signal numérique quantitatif de suivi d'une quantité ou concentration au cours du temps d'un composant (C) dans un fluide (F),
- traiter (104, 106, 108) le signal quantitatif de suivi par filtrage passe-bas,

**caractérisé en ce que** le filtrage passe-bas est réalisé à l'aide d'instructions pour l'exécution des étapes suivantes :

- estimer (104) au cours du temps une tendance instantanée (V) de variation du signal quantitatif dans une fenêtre temporelle glissante prédéterminée, et
- régler (106) au cours du temps une fréquence de coupure haute du filtrage passe-bas en fonction de la tendance instantanée (V) de variation estimée.


**Patentansprüche**

1. Vorrichtung zum Messen und Überwachen im Zeitverlauf der Menge oder Konzentration einer Komponente (C) in einem Fluid (F), aufweisend:

- einen Sensor (10), der in der Lage ist, eine Menge oder Konzentration der Komponente (C) im Fluid (F) zu messen und ein quantitatives Signal der Überwachung dieser Menge oder Konzentration im Zeitverlauf bereitzustellen,
- ein Signalverarbeitungsmodul (12), ein Tiefpassfilter (30) für das quantitative Überwachungssignal aufweisend,
- eine Ausgangsschnittstelle (36) zum Bereitstellen des gefilterten quantitativen Überwachungssignals,

**dadurch gekennzeichnet, dass** das Signalverarbeitungsmodul (12) aufweist:

- einen Schätzer (32) eines Wertes (V) der momentanen Variationstendenz des quantitativen Überwachungssignals in einem vorbestimmten gleitenden Zeitfenster, und
- Einstellmittel (34) im Zeitverlauf einer oberen Grenzfrequenz des Tiefpassfilters (30) in Abhängigkeit des Wertes (V) der geschätzten momentanen Variationstendenz.

2. Vorrichtung zum Messen und Überwachen nach Anspruch 1, wobei der Schätzer (32) konzipiert ist, um den Wert (V) der momentanen Variationstendenz des quantitativen Überwachungssignals zu schätzen, indem ein Steigungswert dieses Signals im vorbestimmten gleitenden Zeitfenster bereitgestellt wird, insbesondere durch lineare Regression.

3. Vorrichtung zum Messen und Überwachen nach Anspruch 1 oder 2, wobei die Einstellmittel (34) so konzipiert sind, dass sie:

- die obere Grenzfrequenz des Tiefpassfilters (30) reduzieren, wenn der Wert (V) der geschätzten momentanen Variationstendenz im Absolutwert abnimmt, und
- die obere Grenzfrequenz des Tiefpassfilters (30) erhöhen, wenn der Wert (V) der geschätzten momentanen Variationstendenz im Absolutwert ansteigt.

4. Vorrichtung zum Messen und Überwachen nach einem der Ansprüche 1 bis 3, wobei das Tiefpassfilter (30) konzipiert ist, um nach einer zeitlichen Abtastung des quantitativen Überwachungssignals eine digitale Filterung durch exponentiell gewichteten gleitenden Mittelwert zu realisieren, gemäß der folgenden wiederholt auftretenden zeitlichen Beziehung:

$$\begin{cases} \bar{y}_1 = y_1 \\ \forall i \geq 2, \ \bar{y}_i = \alpha.\bar{y}_{i-1} + (1-\alpha).y_i \end{cases}$$

wobei $y_1, ... , y_i, ...$ aufeinanderfolgende Zeitabtastwerte des quantitativen Überwachungssignals sind, $\bar{y}_1, ... , \bar{y}_i, ...$ die aufeinanderfolgenden Zeitabtastwerte sind, die sich aus dem gefilterten quantitativen Überwachungssignal ergeben und $\alpha$ ein exponentiell gewichteter Koeffizient der digitalen Filterung ist durch gleitenden Mittelwert zwischen 0 und 1 und mathematisch mit der oberen Grenzfrequenz $f_c$ dieser digitalen Filterung verbunden ist.

5. Vorrichtung zum Messen und Überwachen nach einem der Ansprüche 1 bis 4, wobei die Einstellmittel (34) in Fuzzylogik konfiguriert sind, zum:

- Erkennen von N Zuständen der momentanen Variationstendenz, N ≥ 2, wobei jeder dieser N Zustände einem entsprechenden vorbestimmten oberen Grenzfrequenzwert des Tiefpassfilters (30) zugeordnet ist und einer Funktion der Zugehörigkeit zu Werten im Intervall [0 ; 1], definiert in einem Bereich möglicher Werte der momentanen Variationstendenz, und
- Einstellen der oberen Grenzfrequenz des Tiefpassfilters (30) als Summe der N vorbestimmten oberen Grenzfrequenzwerte, jeweils gewichtet mit N Zugehörigkeitsgraden des Wertes der geschätzten momentanen Variationstendenz jeder der N Zustände der momentanen Variationstendenz, wobei diese Zugehörigkeitsgrade unter Verwendung der N Zugehörigkeitsfunktionen berechnet werden.

6. Vorrichtung zum Messen und Überwachen nach den Ansprüchen 4 und 5, bei der N ≥ 3 und:

- ein erster stabiler Zustand einer oberen Grenzfrequenz zugeordnet ist, die mit einem Wert des Koeffizienten $\alpha$ der exponentiellen Gewichtung zwischen 0,9 und 1 verbunden ist,
- ein zweiter sich langsam variierender Zustand einer oberen Grenzfrequenz zugeordnet ist, die mit einem Wert des Koeffizienten $\alpha$ der exponentiellen Gewichtung zwischen 0,7 und 0,9 verbunden ist,
- ein dritter sich schnell variierender Zustand einer oberen Grenzfrequenz zugeordnet ist, die mit einem Wert des Koeffizienten $\alpha$ der exponentiellen Gewichtung zwischen 0,1 und 0,3 verbunden ist.

7. Vorrichtung zum Messen und Überwachen nach Anspruch 5 oder 6, wobei jede Zugehörigkeitsfunktion eine Gauß-Funktion oder eine stückweise lineare Funktion ist.

8. Vorrichtung zum Messen und Überwachen nach einem der Ansprüche 1 bis 7, wobei der Sensor (10) ein Gassensor mit einem nicht-dispersiven Infrarotsender (16) und einem Thermopile-Detektor (18) ist.

9. Verfahren zum Messen und Überwachen im Zeitverlauf der Menge oder Konzentration einer Komponente (C) in einem Fluid (F), die folgenden Schritte aufweisend:

- Messen (100) einer Menge oder Konzentration der Komponente (C) im Fluid (F) und Bereitstellen (102) eines quantitativen Signals der Überwachung dieser Menge oder Konzentration im Zeitverlauf unter Verwendung eines Sensors (10),
- Verarbeiten (104, 106, 108) des quantitativen Überwachungssignals unter Verwendung eines Tiefpassfilters (30),
- Bereitstellen (110) des gefilterten quantitativen Signals am Ausgang (36),

**dadurch gekennzeichnet, dass** die Verarbeitung (104, 106, 108) des quantitativen Überwachungssignals aufweist:

- eine Schätzung (104), im Zeitverlauf, einer momentanen Variationstendenz (V) des quantitativen Signals in einem vorbestimmten gleitenden Zeitfenster, und
- die Einstellung (106), im Zeitverlauf, einer oberen Grenzfrequenz des Tiefpassfilters (30) in Abhängigkeit der geschätzten momentanen Variationstendenz (V) .

**10.** Von einem Kommunikationsnetz herunterladbares und/oder auf einem computerlesbaren Medium aufgezeichnetes und/oder von einem Prozessor ausführbares Computerprogramm, das Anweisungen zum Ausführen der folgenden Schritte umfasst:

- Empfangen (102) eines digitalen quantitativen Überwachungssignals einer Menge oder Konzentration im Zeitverlauf einer Komponente (C) in einem Fluid (F),
- Verarbeiten (104, 106, 108) des quantitativen Überwachungssignals durch Tiefpassfilterung,

**dadurch gekennzeichnet, dass** die Tiefpassfilterung unter Verwendung von Anweisungen zur Ausführung der folgenden Schritte realisiert wird:

- Schätzen (104), im Zeitverlauf, einer momentanen Variationstendenz (V) des quantitativen Signals in einem vorbestimmten gleitenden Zeitfenster, und
- Einstellen (106), im Zeitverlauf, einer oberen Grenzfrequenz der Tiefpassfilterung in Abhängigkeit der geschätzten momentanen Variationstendenz (V).

**Claims**

1. A device for measuring and tracking over time the quantity or concentration of a component (C) in a fluid (F), comprising:

   - a sensor (10) capable of measuring a quantity or concentration of the component (C) in the fluid (F) and providing a quantitative signal for tracking this quantity or concentration over time,
   - a signal-processing module (12) comprising a low-pass filter (30) of the quantitative tracking signal,
   - an output interface (36) for providing the filtered quantitative tracking signal,

   **characterized in that** the signal-processing module (12) comprises:

   - an estimator (32) of a value (V) of instantaneous trend of variation of the quantitative tracking signal in a predetermined sliding time window, and
   - means (34) for adjusting over time a high cutoff frequency of the low-pass filter (30) according to the estimated value (V) of instantaneous trend of variation.

2. The measuring and tracking device according to claim 1, wherein the estimator (32) is designed to estimate the value (V) of instantaneous trend of variation of the quantitative tracking signal by providing a value of slope of this signal in the predetermined sliding time window, in particular via linear regression.

3. The measuring and tracking device according to claim 1 or 2, wherein the adjustment means (34) are designed in such a way as to:

   - reduce the high cutoff frequency of the low-pass filter (30) when the absolute value of the estimated value (V) of instantaneous trend of variation decreases, and
   - increase the high cutoff frequency of the low-pass filter (30) when the absolute value of the estimated value (V) of instantaneous trend of variation increases.

4. The measuring and tracking device according to any one of claims 1 to 3, wherein the low-pass filter (30) is designed to carry out, after time sampling of the quantitative tracking signal, a digital filtering by exponentially weighted moving average according to the following time recurrence relation:

$$\begin{cases} \bar{y}_1 = y_1 \\ \forall i \geq 2, \ \bar{y}_i = \alpha.\bar{y}_{i-1} + (1-\alpha).y_i \end{cases}$$

where $y_1,...,y_i,...$ are successive time samples of the quantitative tracking signal, $\bar{y}_1,...,\bar{y}_i,...$ are the successive time samples resulting from the filtered quantitative tracking signal and $\alpha$ is an exponential-weighting coefficient of the digital filtering by moving average between 0 and 1 and mathematically related to the high cutoff frequency $f_C$ of this digital filtering.

5. The measuring and tracking device according to any one of claims 1 to 4, wherein the adjustment means (34) are configured using fuzzy logic in such a way as to:

- distinguish N states of instantaneous trend of variation, N ≥ 2, each of these N states being associated with a predetermined corresponding value of high cutoff frequency of the low-pass filter (30) and with a membership function with values in the interval [0; 1] defined in a range of possible values of instantaneous trend of variation, and
- adjust the high cutoff frequency of the low-pass filter (30) as a sum of the N predetermined values of high cutoff frequency respectively weighted by N degrees of membership of the estimated value of instantaneous trend of variation in each of the N states of instantaneous trend of variation, these degrees of membership being calculated using the N membership functions.

6. The measuring and tracking device according to claims 4 and 5, wherein N ≥ 3 and:

- a first stable state is associated with a high cutoff frequency linked to a value of the exponential weighting coefficient $\alpha$ between 0.9 and 1,
- a second state of slow variation is associated with a high cutoff frequency linked to a value of the exponential weighting coefficient $\alpha$ between 0.7 and 0.9,
- a third state of fast variation is associated with a high cutoff frequency linked to a value of the exponential weighting coefficient $\alpha$ between 0.1 and 0.3.

7. The measuring and tracking device according to claim 5 or 6, wherein each membership function is a Gaussian or piecewise linear function.

8. The measuring and tracking device according to any one of claims 1 to 7, wherein the sensor (10) is a gas sensor with a non-dispersive infrared emitter (16) and a thermopile detector (18).

9. A method for measuring and tracking over time the quantity or concentration of a component (C) in a fluid (F), comprising the following steps:

- measuring (100) a quantity or concentration of the component (C) in the fluid (F) and providing (102) a quantitative signal for tracking this quantity or concentration over time, using a sensor (10),
- processing (104, 106, 108) the quantitative tracking signal using a low-pass filter (30),
- providing (110) the filtered quantitative signal at the output (36),

**characterized in that** the processing (104, 106, 108) of the quantitative tracking signal comprises:

- an estimation (104) over time of an instantaneous trend (V) of variation of the quantitative signal in a predetermined sliding time window, and
- the adjustment (106) over time of a high cutoff frequency of the low-pass filter (30) according to the estimated instantaneous trend (V) of variation.

10. A computer program downloadable from a communication network and/or recorded on a medium readable by computer and/or executable by a processor, comprising instructions for the execution of the following steps:

- receiving (102) a quantitative digital signal for tracking a quantity or concentration over time of a component (C) in a fluid (F),
- processing (104, 106, 108) the quantitative tracking signal by low-pass filtering,

**characterized in that** the low-pass filtering is carried out using instructions for the execution of the following steps:

- estimating (104) over time an instantaneous trend (V) of variation of the quantitative signal in a predetermined sliding time window, and
- adjusting (106) over time a high cutoff frequency of the low-pass filtering according to the estimated instantaneous trend (V) of variation.

## Figure 1

## Figure 2

## Figure 3

$\alpha(1) = 0,99 \quad \alpha(2) = 0,8 \quad \alpha(3) = 0,2$

## Figure 4

## Figure 5

**EP 3 619 519 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20030058439 A1
- WO 2007064370 A2

- US 4863265 A

**Littérature non-brevet citée dans la description**

- **G. CASIEZ et al.** 1€ Filter: A Simple Speed-based Low-pass Filter for Noisy Input in Interactive Systems. *Proc. CHI'12,* 2012, 2527-2530

- **RICK LYONS.** Understanding Digital Signal Processing. Prentice Hall Publishing, 2011, 613-614